# EUROPEAN PATENT APPLICATION

(11) **EP 1 645 539 A1**
(43) Date of publication of application: **12.04.2006**
(21) Application number: 04425743.4
(22) Date of filing: 05.10.2004
(51) Int. Cl.: C01B 3/06

(54) **Chemical process for the production of electric power and of hydrogen**

(71) Applicant: Facchiano, Giovanni, 00124 Roma (IT); Balini, Mauro, 00124 Rome (IT); Balini, Roberto, 00124 Rome (IT)
(72) Inventor: Facchiano, Giovanni, 00124 Rome (IT)
(74) Representative: Iannone, Carlo Luigi

(57) **Abstract**

The invention relates to a process for the production of electric power, hydrogen and aluminium hydroxide, said process comprising the following steps:
- introducing mercury and a water and acid solution within a container,
- introducing a metal or a metal alloy within the container;
- making mercury fixedly coupling on the outer surface of the metal or of the alloy;
- extracting the metal or metal alloy and mercury thus coupled from the solution within which they were immerged.

## Description

The present invention relates to a chemical process for production of electric power and for production of hydrogen.

More specifically, the invention concerns to a process of the above kind allowing producing electric power with low costs.

As it is well known, one of the bigger problems for producing electric power and hydrogen is the intrinsic high cost of all the known production processes.

It is also known that many metals have a positive electric charge or a negative electric charge, so that, immerging them within an acid solution, it is possible obtaining electric power.

Said action lasts for the time necessary to consume the acid solution or the metal.

Furthermore, the system must be provided with a positive charge metal and with a negative charge metal.

Systems are also known used for chemically transforming elements (electric power accumulators), while present state of the art provides that hydrogen can be obtained from methane (CH₄) gas, or by electrolysis, thus consuming electric power.

In this situation, it is well evident the advantage of having a process as the one suggested by the present invention, allowing, as already said, to produce electric power and hydrogen with very low costs.

Therefore, main object of the present invention is that of providing an innovative process for producing electric power and for producing hydrogen.

By the process according to the invention, costs for production of electric power are relevant to the realisation of the same model, while costs relevant to the production of hydrogen are relevant to the realisation of the model, to the consume of water and aluminium obtained from industrial wastes, recovering aluminium oxide "Al₂O₃", in a granulose form suitable for aluminium foundry as raw matter.

Costs relevant to the process suggested according to the present invention, if compared with the nuclear technologies for production of electric power, are surely lower.

The above considerations are still more valid in view of the fact that the metals used are not radioactive metals.

Furthermore, the process according to the invention is very simple, since the metal used is immerged within light water, thus immediately starting the production of electric power or of hydrogen (on the basis of the metal used).

These and other results are obtained according to the present invention, suggesting a process that allows consuming water to produce electric power, permanently maintaining the metal, without any modification during the time, and consuming metal and water to produce water.

It is therefore specific object of the present invention a process for the production of electric power, hydrogen and aluminium hydroxide, said process comprising the following steps:
- introducing mercury and a water and acid solution within a container,
- introducing a metal or a metal alloy within the container;
- making mercury fixedly coupling on the outer surface of the metal or of the alloy;
- extracting the metal or metal alloy and mercury thus coupled from the solution within which they were immerged.

According to the invention, in a first embodiment, cuprum, zinc, titanium or other metals having conductive properties, and they alloys are employed as metal.

In a second preferred embodiment of the process according to the invention, aluminium ad mercury are employed as metal, integrally coupled and extracted from the container and immerged within light water, thus immediately obtaining the production of hydrogen and aluminium oxide, consuming water.
→

Al + H₂O → Al₂O₃ + H₂

Preferably, according to the invention, said metal can be aluminium or magnesium, or their alloys.

Always according to the invention, the acid solution for catalysation of metal can vary between 1% and 50%, the variation of the percentage causing the variation of the metal transformation rate.

The present invention will be now described, for illustrative but not limitative purposes, according to its preferred embodiments, with particular reference to the figures of the enclosed drawings, wherein:

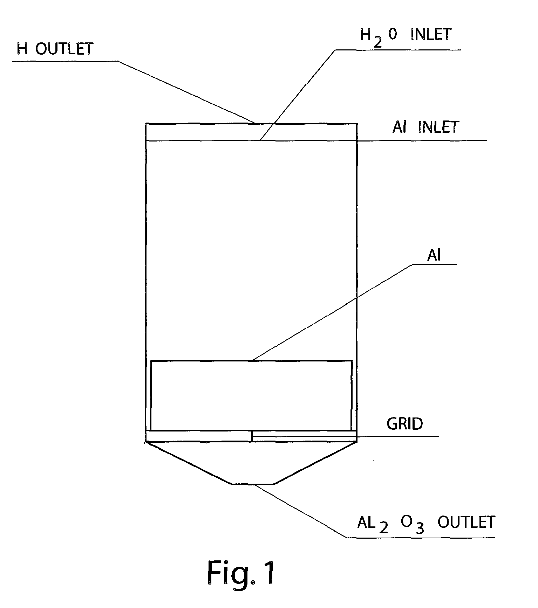

Figure 1 shows an example of a system that can be used for the process according to the invention;

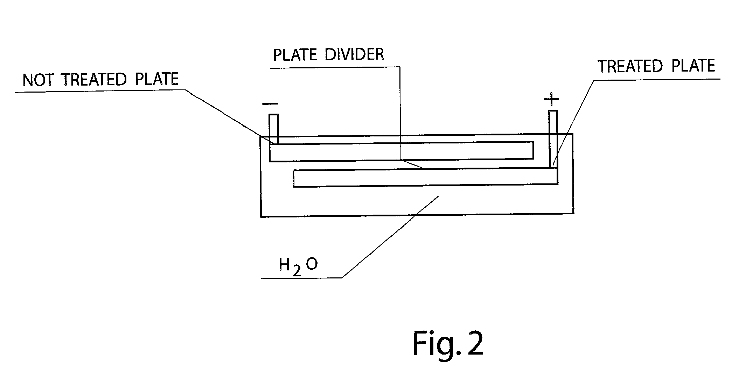

Figure 2 shows a particular of the system of figure 1; and
Figure 3 shows a further example of a system exploiting the process according to the invention.

As it is well evident from the above description, the system according to the invention can be used for producing electric power and for producing hydrogen.

For production of electric power, the system provides a plurality of containers, serially or in parallel provided, to increase voltage and amperage of the produced electric power, an automatic supply of water consummated, electronically controlled by a level measurer and by supplying electro valves, and, in case of very large systems, a fuel cell for unifying hydrogen and oxygen (H₂ + O → H₂O), and further production of electric power.

Plates of each container, an electropositive metal plate and an electronegative metal plate, must be both treated by mercury.

Immerging the treated metal and the same kind of untreated metal within water, an immediate production of electric power is obtained, making the electrons passing between the two plates, thus consuming water "H₂O" that will be ejected as hydrogen and oxygen. Two gases can be recovered in already existing apparatuses, as "fuel cells", which recomposes them producing electric power.

In case of production of hydrogen, the system provides a tank containing water and treated aluminium wastes, a supplying line for the aluminium wastes, with a sealed closure door, and a tube for the extraction of the produced oxide.

In the following, a description of an embodiment of the process will be provided.

### Metal transformation:

Mercury is poured within a container along with a H₂O + HCl solution.

Immerging the metal within the container, a chain reaction is started, so that in few minutes it evenly fixes on the surface of the metal: to obtain this effect it is not necessary employing electric power.

Chain reaction induced by the process makes the mercury rotating slowly, so as to circulate by the effect of the heating neutrons, i.e. an effect similar to the braking effect in an alternate magnetic field on a rotating aluminium disc.

In other words, a magnetic field is obtained between the metal and mercury.

By extracting after few minutes the metal from the solution, mercury will remain magnetically coupled by direct synthesis of a chain reaction involving the presence of free radicals between "Al + Hg" (exploiting the catalyser effect of H₂O + Hcl up to the total consumption of the metal in case the metal is aluminium; if metal does not attracts oxygen, electrons will freely travel within H₂O, breaking the molecule in two hydrogen atoms and one oxygen atom, this process constantly producing electric power until the exhaustion of water.

When producing hydrogen, mercury can be recovered along with aluminium oxide to use again afterwards.

The process can be interrupted only in two way, namely, while producing hydrogen, closing under vacuum the metal, letting it completely transforming into Al₂O₃, and when producing electric power, emptying the reservoirs, and closing under vacuum the untreated metal.

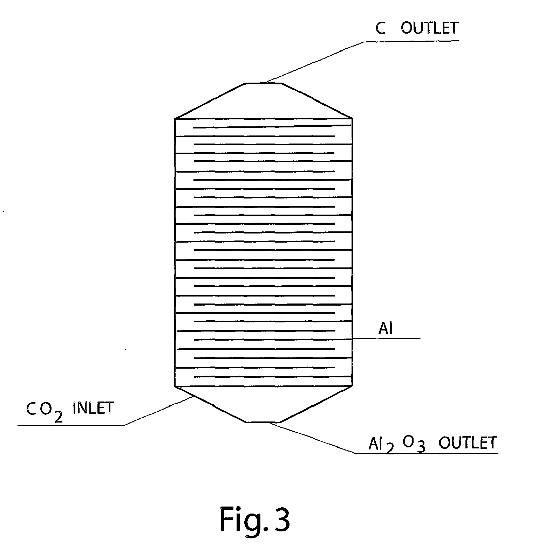

Observing now figure 3 of the enclosed drawings, it is shown a system wherein the catalysation process of aluminium is exploited for transforming the combustion residual of an engine, or other kind of apparatus producing carbon dioxide and carbon oxide during the combustion phase.

In this case, as shown in the figure, aluminium obtained according to the process described in the above, is introduced within a forced passage container, wherein it takes oxygen alloyed with carbon letting pass only the same carbon molecule at the outlet of the system.

In case it is wished to obtain the carbon molecule pure, carbon can be used as combustible gas, the combustion of which produces again carbon dioxide.

Otherwise, carbon can be treated with hydrogen, transforming into combustible, like benzene.

In the first case, the following kind of reaction is obtained:
Al + CO₂ → 2Al₂O₃ + C₃ Production of combustible gas
Al + CO₂ → 4Al₂O₃ + C₆ → H₆ + C₆ → C₆H₆ Production of benzene.

By the process according to the invention, it is possible to obtain a very low cost transformation of metal, with a high energy efficiency, low costs for the production of electric power, as well as a process absolutely free from risks and danger for the collectivity and for the operators.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Process for the production of electric power, hydrogen and aluminium hydroxide, said process comprising the following steps:
- introducing mercury and a water and acid solution within a container,
- introducing a metal or a metal alloy within the container;
- making mercury fixedly coupling on the outer surface of the metal or of the alloy;
- extracting the metal or metal alloy and mercury thus coupled from the solution within which they were immerged.

2. Process according to claim 1, **characterised in that** cuprum, zinc, titanium or other metals having conductive properties, and they alloys are employed as metal.

3. Process according to claim 1, **characterised in that** aluminium ad mercury are employed as metal, integrally coupled and extracted from the container and immerged within light water, thus immediately obtaining the production of hydrogen and aluminium oxide, consuming water.
→
Al + H₂O → Al₂O₃ + H₂

4. Process according to claim 3, **characterised in that** said metal is aluminium or magnesium, or their alloys.

5. Process according to one of the preceding claims, **characterised in that** the acid solution for catalysation of metal vary between 1% and 50%, the variation of the percentage causing the variation of the metal transformation rate.

6. Process according to one of the preceding claims, **characterised in that** aluminium obtained is introduced within a forced passage container, wherein it, merging with the engine discharge, or with the discharge of another apparatus, takes oxygen alloyed with carbon letting pass only the same carbon molecule at the outlet of the system.

7. Process according to claim 6, **characterised in that** carbon is used as combustible gas, the combustion of which produces again carbon dioxide, according to the reaction
Al + CO₂ → 2Al₂O₃ + C₃ Production of combustible gas.

8. Process according to claim 6, **characterised in that** carbon is treated with hydrogen, transforming into combustible, like benzene, according to the reaction
Al + CO₂ → 4Al₂O₃ + C₆ → H₆ + C₆ → C₆H₆ Production of benzene.

9. Process for the production of electric power, hydrogen and aluminium hydroxide, according to each one of the preceding claims, substantially as illustrated and described.
